# EUROPEAN PATENT APPLICATION

(11) **EP 4 685 448 A1**
(43) Date of publication of application: **28.01.2026**
(21) Application number: 25191418.0
(22) Date of filing: 23.07.2025
(51) Int. Cl.: G01M 3/28

(54) **SYSTEMS, DEVICE AND METHODS FOR WATER METERING WITH LEAK DETECTION AND SURVEILLANCE**

(30) Priority: 23.07.2024 US 202463674600 P
(71) Applicant: Rhino Leak Defense Inc., Maple, Ontario L6A 1R3 (CA)
(72) Inventor: Bertuzzi, John, Maple, L6A 1R3 (CA)
(74) Representative: Humphrey-Evans, Edward John

(57) **Abstract**

Provided is a system, method and device for water metering with leak detection and surveillance. The system includes an intelligent water meter configured to initiate flow rate measurement from a starting flow monitor a plurality of preset parameters in real time, wherein the preset parameters include any one or more of water temperature, water pressure, water flow rate and water usage, as well as environmental temperature and humidity; deliver real-time data about the plurality of preset parameters to a intelligence platform. and turn on or off a water valve automatically when a predetermined threshold is reached. A detector is installed for monitoring a functioning appliance. The detector is configured to deliver real-time data regarding water leaking to the intelligence platform and the intelligent water meter respectively. The intelligence platform is configured to determine evaluation of water flow and risk when receiving the real-time data about the plurality of preset parameters and deliver predetermined settings to the intelligent water meter.

## Description

### Technical Field

The embodiments disclosed herein relate to the internet of things (IoT), and in particular to water metering with leak detection and surveillance.

### Introduction

Leaking pipes, frozen pipes, or mold growing in pipes can be detrimental to homes and even a health risk to those living in the home. Historically, there have been water monitoring mechanisms designed for public or home use. For example, water leakage detectors can be used outdoors, such as in public sewers, but others are used in the home. Some conventional detectors at least include a monitoring system that includes sensing cables, hydrostatic testing, infrared and laser technology, and an alarm activation system. In any emergency, normal plumbing repair required manual shut-off of water valves.

Now there are some mechanisms for controlling water valves via Internet connection, and the development of intelligent water meters also helps with leak detection. Intelligent water meters are typically used to transmit data such as water usage in real-time, which not only allows for more accurate measurement and billing but also provides leak warnings based on water usage. However, conventional water control systems still have some drawbacks. Traditional systems may simply use auto shut-off mechanisms that only work when water hits the sensor.

Accordingly, there is a need for water metering with leak detection and surveillance methods, devices and systems described herein.

### Summary

The present disclosure is generally directed to water supply control systems, more particularly smart water meter and leakage detection system. It may be advantageous to provide a technological solution by detecting water leak and surveillance for home-users to more conveniently control water usage monitoring through different preset modes and with context of the history of certain areas of the home, in order to more effectively protect their homes from leakage. An application that users can access would help with this, as well as a multiple-detector system that can be monitored 24/7 to be alerted in real-time of any risks for flooding or water machine leakages, as well as protecting against frost and mold risks.

There are many benefits to continuous monitoring that can be accessed and controlled through an app which also gives notifications to users. There are also several different modes that home-users can take advantage of that may change the monitoring settings according to whether they are available or away from their home. There are also benefits that come with connecting multiple detectors within the home for whole home protection, allowing a wide range of home water management. Allowing for customized notification systems, controlled water flow, monitoring, and historical reports to users, homeowners can have more control and knowledge of their household water usage and health. The implementation of such a device may even allow for a reduction in Homeowner's Insurance.

According to some embodiments, there is a computer system for water metering with leak detection and surveillance system and method and device to improve efficiency and security of supply water operations. The various embodiments described herein generally relate to methods (and associated system configured to implement the methods) for water metering with leak detection and surveillance system to proceed supply water valve intelligently and manageably.

In accordance with an aspect of the invention there is provided a system for water metering with leak detection and surveillance, the system comprising: an intelligent water meter configured to initiate flow rate measurement from a starting flow, monitor a plurality of preset parameters in real time, wherein the preset parameters include any one or more of water temperature, water pressure, water flow rate and water usage, as well as environmental temperature and humidity, deliver real-time data about the plurality of preset parameters to an intelligence platform, turn on or off a water valve automatically when a predetermined threshold is reached; and a detector installed for monitoring a functioning appliance, the detector configured to deliver real-time data regarding water leaking to the intelligence platform and the intelligent water meter; and the intelligence platform configured to deliver predetermined settings to the intelligent water meter; generating billing information based on the real-time data delivered by the intelligent water meter; and determine evaluation of water flow and risk when receiving the real-time data about the plurality of preset parameters.

The starting flow may be set from a predetermined Gallons Per Minute (GPM) amount. The system may further include a mobile device configured to receive and display the real-time data of water parameters, and pre-determine conditions for controlling remotely the intelligent water meter. The intelligent water meter may be communicatively connected to the mobile device, the detector and the intelligence platform via a wireless network. The wireless network may include Bluetooth Low Energy.

The detector may be further configured to deliver real-time notifications of water events that happen outside of pipes. The notification may include a low water flow alert when a water flow duration exceeds a predetermined threshold. The notification may include a time alert when a time range exceeds a predetermined threshold that is between 0 minutes to 120 minutes. The notification may include a low water temperature when a water temperature duration exceeds a predetermined threshold.

The intelligence platform may be configured to communicatively connect to the detector and the intelligent water meter for a drip leak test of pipe plumbing. The drip leak test may be cancelled immediately upon the intelligent water meter detecting that there is no water in a pipeline.

The intelligent water meter may be configured to maintain operational functionalities during power interruptions lasting at least six months. The intelligent water meter may be further configured to execute the plurality of thresholds remotely in a home mode, an away mode and a disarm mode. The plurality of threshold includes time period of water continuous use, water temperature, notification setting and automatic shut-off setting.

In accordance with another aspect of the invention, there is provided a computer implemented method for water metering with leak detection and surveillance, the computer implemented method comprising: initiating flow rate measurement from a starting flow; monitoring a plurality of preset parameters in real time, wherein the preset parameters include any one or more of water temperature, water pressure, water flow rate and water usage as well as environmental temperature and humidity; determining evaluation of water flow and risk when receiving the real-time data about the plurality of water parameters; receiving predetermined settings from the intelligence platform, wherein the predetermined settings are set by a mobile device; and turning on or off a water valve automatically when predetermined thresholds reached.

In accordance with a further aspect of the invention there is provided intelligent water meter comprising: an initiating module configured to initiate flow rate measurement from a starting flow; a monitoring module configured to monitor a plurality of preset parameters in real time, wherein the preset parameters include any one or more of water temperature, water pressure, water flow and water usage as well as environmental temperature and humidity; a communicating module configured to deliver real-time data about the plurality of preset parameters to an intelligence platform, and receive predetermined settings from the intelligence platform, wherein the predetermined settings are set by a mobile device; and a control module configured to turn on or off a water valve automatically when predetermined thresholds reached.

The intelligent water meter may further include a Liquid-crystal Display (LCD) display for displaying values. The starting flow may be set from a predetermined Gallons Per Minute (GPM) amount. The communicating module may be communicatively connected to the mobile device and the intelligence platform via a wireless network. The wireless network may include Bluetooth Low Energy (BLE).

In accordance with a still further aspect of the invention there is provided a computer implemented method for detecting water leak and surveillance, applied in an intelligent water meter, the computer implemented method comprising: initiating flow rate measurement from a starting flow; monitoring a plurality of preset parameters in real time, wherein the preset parameters include any one or more of water temperature, water pressure, water flow and water usage as well as environmental temperature and humidity; delivering real-time data about the plurality of preset parameters to an intelligence platform; receiving predetermined settings from the intelligence platform, wherein the predetermined settings are set by a mobile device; and turning on or off a water valve automatically when the predetermined thresholds are reached.

Other aspects and features will become apparent to those ordinarily skilled in the art, upon review of the following description of some exemplary embodiments.

While the above description provides examples of one or more apparatus, methods, or systems, it will be appreciated that other apparatus, methods, or systems may be within the scope of the claims as interpreted by one of skill in the art. Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a systems for water metering with leak detection and surveillance, in accordance with an embodiment;
Figure 2 is a block diagram of a computing device for water metering with leak detection and surveillance, according to an embodiment;
Figure 3 is a block diagram of a computer system for water metering with leak detection and surveillance, according to an embodiment;
Figure 4 is a block diagram of an intelligence platform for water metering with leak detection and surveillance, according to an embodiment;
Figure 5 is a block diagram of a method for water metering with leak detection and surveillance, according to an embodiment;
Figure 6 is a block diagram of an intelligent water meter for water metering with leak detection and surveillance, according to an embodiment;
Figures 7A - 7E are an example device display for three modes; and
Figure 7F is an example device display for plumbing health check.
Figures 8A-8D are example devices for intelligent water metering with four sizes of caliber.
Figures 9A-9B show two installation examples of an intelligent water meter.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistant, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of more than one device or article.

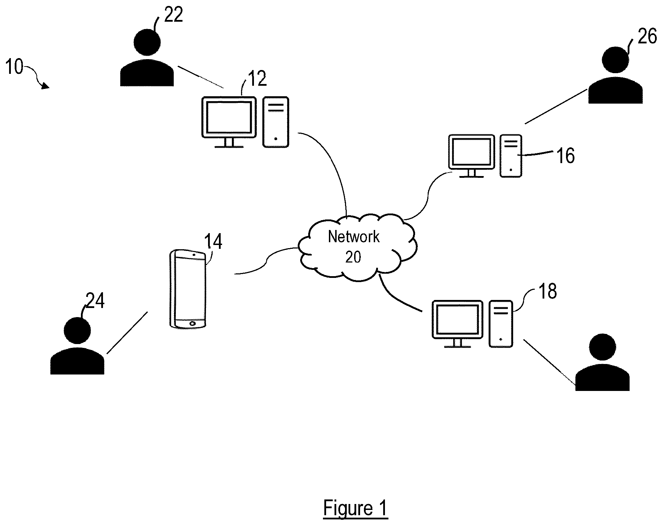

Referring now to Figure 1, shown therein is a block diagram illustrating a system 10 for water metering with leak detection and surveillance, in accordance with an embodiment. The system 10 includes a first participant device 12 for communicating with a first participant 22, a second participant device 14 for communicating with a second participant 24, and a third participant device 16 for communicating with a third participant 26.

The devices 12, 14, 16, 18 may be a server computer, desktop computer, notebook computer, tablet, PDA, smartphone, or another computing device. The devices 12, 14, 16, 18 may include a connection with the network 20 such as a wired or wireless connection to the Internet. In some cases, the network 20 may include other types of computer or telecommunication networks. The devices 12, 14, 16, 18 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage, or may be received from the Internet or other network 20. Input device may include any device for entering information into device 12, 14, 16, 18. For example, input device may be a keyboard, key pad, cursor-control device, touchscreen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, device 12, 14, 16, 18 may include multiple of any one or more of processors, applications, software modules, second storage devices, network connections, input devices, output devices, and display devices.

Although devices 12, 14, 16, 18 are described with various components, one skilled in the art will appreciate that the devices 12, 14, 16, 18 may in some cases contain fewer, additional or different components. In addition, although aspects of an implementation of the devices 12, 14, 16, 18 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the devices 12, 14, 16, 18 and/or processor to perform a particular method.

In the description that follows, devices 12, 14, 16, 18 are described performing certain acts. It will be appreciated that any one or more of these devices may perform an act automatically or in response to an interaction by a user of that device (such as the first participant 22, the second participant 24, the third participant 26, and the fourth participant 28, respectively). That is, the user of the device may manipulate one or more input devices (e.g. a touchscreen, a mouse, or a button) causing the device to perform the described act. In many cases, this aspect may not be described below, but it will be understood.

As an example, it is described below that the devices 12, 16, 18 may send information to the second participant device 14. For example, the second participant 24 using the second participant device 14 may manipulate one or more input devices (e.g., a mouse and a keyboard) to interact with a user interface displayed on a display of the second participant device 14. Generally, the devices 12, 14, 16, 18 may receive a user interface from the network 20 (e.g., in the form of a webpage). Alternatively or in addition, a user interface may be stored locally at a device (e.g., a cache of a webpage or a mobile application).

In response to receiving information, the second participant device 14 may store the information in a storage database. The storage may correspond with secondary storage of the second participant device 14. Generally, the storage database may be any suitable storage device such as a hard disk drive, a solid state drive, a memory card, or a disk (e.g. CD, DVD, or Blu-ray etc.). Also, the storage database may be locally connected with the second participant device 14. In some cases, storage database may be located remotely from the second participant device 14 and accessible to the second participant device 14 across a network for example. In some cases, the storage database may comprise one or more storage devices located at a networked cloud storage provider.

The first participant device 12 may be associated with a first participant account. Similarly, the second participant device 14 may be associated with a second participant account. Similarly, the third participant device 16 may be associated with a third participant account. Similarly, the fourth participant device 18 may be associated with a fourth participant account. Any suitable mechanism for associating a device with an account is expressly contemplated. In some cases, a device 12, 14, 16, 18 may be associated with an account by sending credentials (e.g., a cookie, login, password) to the respective device. The respective device may verify the credentials (e.g., determine that the received password matches a password associated with the account). If a device 12, 14, 16, 18 is associated with an account, the other devices may consider further acts by that device 12, 14, 16, 18 to be associated with that account.

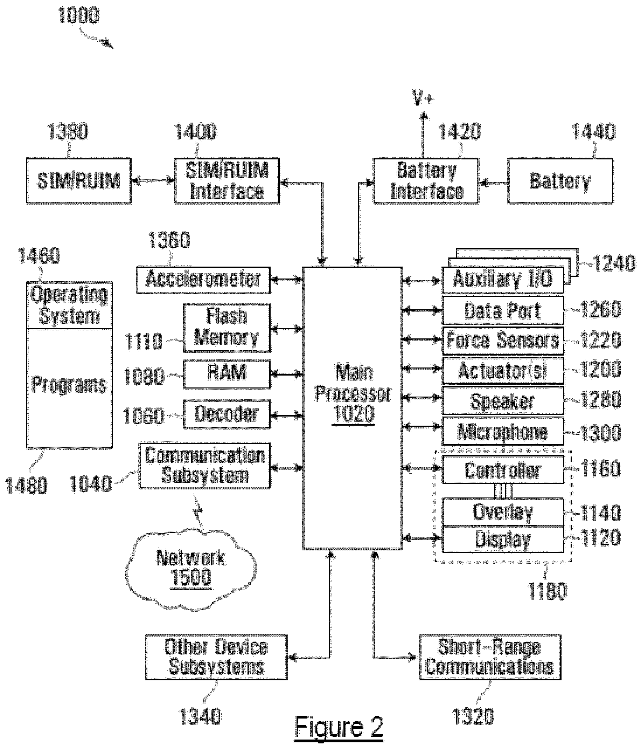

Referring now to Figure 2, shown therein is a block diagram of a computing device 1000 of the system 10 of Figure 1, according to an embodiment. The computing device 1000 may be, for example, any one of the devices 12, 14, 16, and/or 18 of Figure 1.

The computing device 1000 includes multiple components such as a processor 1020 that controls the operations of the computing device 1000. Communication functions, including data communications, voice communications, or both may be performed through a communication subsystem 1040. Data received by the computing device 1000 may be decompressed and decrypted by a decoder 1060. The communication subsystem 1040 may receive messages from and send messages to a wireless network 1500. The wireless network 1500 may be any type of wireless network, including, but not limited to, data-centric wireless networks, voice-centric wireless networks, and dual-mode networks that support both voice and data communications. The computing device 1000 may be a battery-powered device and as shown includes a battery interface 1420 for receiving one or more rechargeable batteries 1440.

The processor 1020 also interacts with additional subsystems such as a Random Access Memory (RAM) 1080, a flash memory 1110, a display 1120 (e.g., with a touch-sensitive overlay 1140 connected to an electronic controller 1160 that together comprise a touch-sensitive display 1180), an actuator assembly 1200, one or more optional force sensors 1220, an auxiliary input/output (I/O) subsystem 1240, a data port 1260, a speaker 1280, a microphone 1300, short-range communications systems 1320 and other device subsystems 1340. In some embodiments, user-interaction with the graphical user interface may be performed through the touch-sensitive overlay 1140. The processor 1020 may interact with the touch-sensitive overlay 1140 through the electronic controller 1160. Information, such as text, characters, symbols, images, icons, and other items that may be displayed or rendered on a computing device generated by the processor 1020 may be displayed on the touch-sensitive display 1180. The processor 1020 may also interact with an accelerometer 1360. The accelerometer 1360 may be utilized for detecting direction of gravitational forces or gravity-induced reaction forces.

To identify a subscriber for network access according to the present embodiment, the computing device 1000 may use a Subscriber Identity Module or a Removable User Identity Module (SIM/RUIM) card 1380 inserted into a SIM/RUIM interface 1400 for communication with a network (such as the wireless network 1500). Alternatively, user identification information may be programmed into the flash memory 1110 or performed using other techniques.

The computing device 1000 also includes an operating system 1460 and software components 1480 that are executed by the processor 1020 and which may be stored in a persistent data storage device such as the flash memory 1110. Additional applications may be loaded onto the computing device 1000 through the wireless network 1500, the auxiliary I/O subsystem 1240, the data port 1260, the short-range communications subsystem 1320, or any other suitable device subsystem 1340.

In use, a received signal such as a text message, an e-mail message, web page download, or other data may be processed by the communication subsystem 1040 and input to the processor 1020. The processor 1020 then processes the received signal for output to the display 1120 or alternatively to the auxiliary I/O subsystem 1240. A subscriber may also compose data items, such as e-mail messages, for example, which may be transmitted over the wireless network 1500 through the communication subsystem 1040. For voice communications, the overall operation of the computing device 1000 may be similar. The speaker 1280 may output audible information converted from electrical signals, and the microphone 1300 may convert audible information into electrical signals for processing.

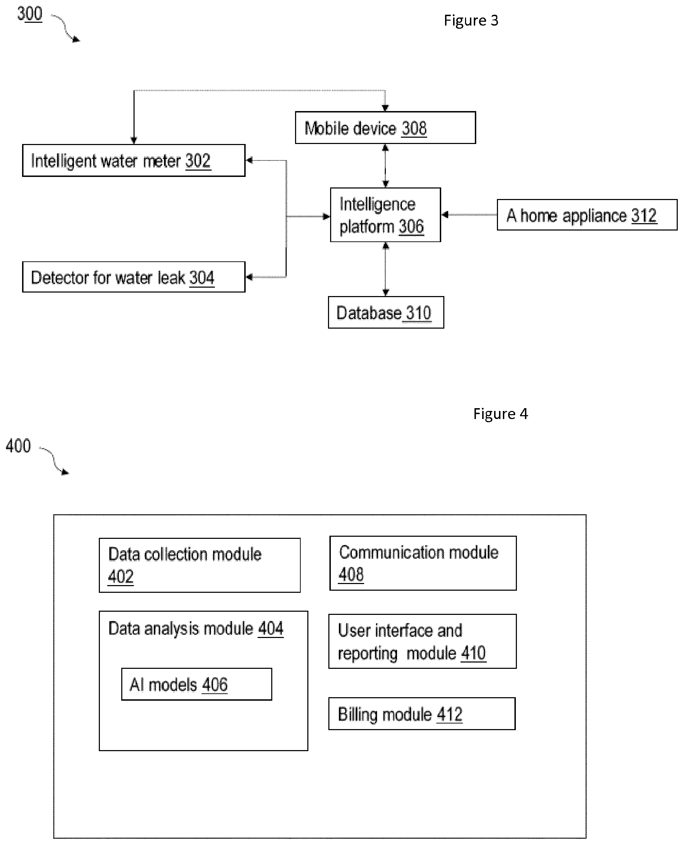

Referring to Figure 3, shown therein is a block diagram of a computer system 300 for water metering with leak detection and surveillance. The computer system 300 includes an intelligent water meter 302, a detector for water leak 304, an intelligent platform306, a mobile device 308 and database 310. The computer system 300 may be, for example, the system 10 of Figure 1.

The computer system 300 comprising the embedded software and applications required for the intelligent water meter 302, the functions at least include real-time data acquisition, communication protocols, remote control interfaces and so on. The computer system 300 is capable of communicating with at least one water leak detector 306, with each detector assigned to monitor a specific home appliance within an entire residential water network. This capability facilitates the management of multiple home appliances for residential water management purposes to cover a wider range in home.

The mobile device 308 may allow connection to an application for remote control of the water valve, enabling users to add each wireless connected device using the application. The device may be an intelligent water meter, a plurality of detectors and so on. In the exemplary embodiment, the application may be downloaded on both the Google Play Store and the IOS App store.

Functions of the application may include real-time water temperature monitoring and signal water pipe low temperature warning. There may also include real-time flow rate monitoring, which may be vertical placement or horizontal placement, built-in water meter with flow statistics function, and accuracy of flow rate of 500ml/min. Lastly, the exemplary embodiment may include real-time water pressure monitoring.

The intelligent water meter 302 initiates flow rate measurement from a starting flow. The starting flow refers to the minimum amount of water that the intelligent water meter can accurately measure. Generally, the flow ranges correspond to the caliber of the water meter, with the Q1 level representing the minimum flow rate within its category of flow ranges, as required by The International Organization for Standardization of Water and The Measurement of Canada. Q1 Level presents an essential indicator for effective leak detection and measuring very low water consumption. Q1 level is commonly used in applications that require high-precision measurements for commercial and industrial purposes.

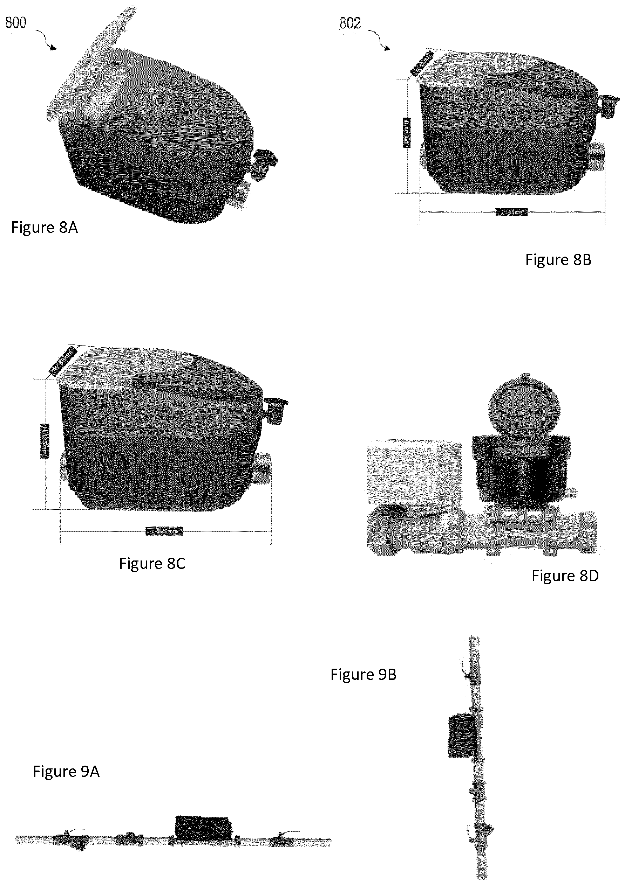

Table 1 shows the starting flow in various calibers of the intelligent water meter, for example, Figures 8A-8D, compared to the Q1 level standard. The comparison results from TABLE 1 indicate the intelligent water meter has a higher measurement accuracy than Q1 Level as required by The International Organization for Standardization of Water and The Measurement of Canada.

**TABLE 1**

| Caliber | | Length (mm) | Wide (mm) | Height (mm) | Starting Flow (GPM) | Q1 Level (GPM) |
|---|---|---|---|---|---|---|
| DN20 | 3/4" - inch | 195 | 98 | 120 | 0.0069 | 0.0704 |
| DN25 | 1" - inch | 225 | 98 | 135 | 0.0110 | 0.1110 |
| DN40 | 1.5" - inch | 200 | 170 | 400 | 0.0176 | 0.2818 |
| DN50 | 2" - inch | 308 | 170 | 400 | 0.0264 | 0.4403 |

In some embodiments, the caliber of the intelligent water meter 302 is 3/4" (19cm), and the intelligent water meter can initiate flow rate measurement when the starting flow is 0.0069 Gallon Per Minute (GPM) amount. In some embodiments, the caliber of the intelligent water meter 302 is 1" (2.5cm), and the intelligent water meter can initiate flow rate measurement when the starting flow is 0.0110 GPM amount. In some embodiments, the caliber of the intelligent water meter 302 is 1.5" (3.8cm), and the intelligent water meter can initiate flow rate measurement when the starting flow is 0.0176GPM amount. In some embodiments, the caliber of the intelligent water meter 302 is 2" (5.0cm), and the intelligent water meter can initiate flow rate measurement when the starting flow is 0.0264 GPM amount.

Therefore, an intelligent water meter 302 with a suitable caliber for the installation will ensure that even the smallest flows are measured correctly, which is essential for efficient water management and early detection of leak issues.

The intelligent water meter 302 monitors a plurality of preset parameters in real time. In some embodiments, leak detection technology utilizes a plurality of ultrasonic sensors to sample the pressure in the entire residential water system 240 times every second. In some embodiments, the intelligent water meter 302 includes a sensor for monitoring water temperature in the pipe in real time. In some embodiments, the intelligent water meter 302 includes a sensor for monitoring water pressure in the pipe in real time. In some embodiments, the intelligent water meter 302 includes a sensor for monitoring water usage in the pipe in real time.

In some embodiments, the intelligent water meter 302 includes a sensor for monitoring both environmental temperature and humidity in real time. The threshold of environmental temperature and humidity can be pre-set to correspond to either outdoor or indoor conditions, depending upon the installation environment of the intelligent water meter 302.

In some embodiments, the intelligent water meter 302 can be used for cold water pipes and hot water pipes. For the hot water pipes, the intelligent water meter 302 can withstand a temperature range of 90 to 130 degrees Celsius (°C). However, the actual temperature of the hot water cannot exceed 100°C, since the steam water cannot be measured by a water meter. Therefore, 100°C is the maximum measurable temperature for the intelligent water meter 302.

Furthermore, the intelligent water meter 302 has qualified by CUL Certification (Canadian Underwriters Laboratories), NSF Certification (National Sanitation Foundation), ISO9001 Certification (International Organization for Standardization), AWWA 700-20 Certification (American Water Works Association), FCC Certification (Federal Communications Commission) and IC Certification (Industry Canada).

The intelligence platform 306 collects real-time data of the plurality of preset parameters from the intelligent water meter 302. The intelligence platform 306 collects real-time data of the plurality of preset parameters from the detector for water leak 304. The intelligence platform 306 determines evaluation of water flow and risk according to the real-time data of the plurality of preset parameters. Once the risk is determined, the intelligence platform 306 sends emergency water use alerts to the mobile device 308. In particular, irregularities in water parameters, for example, a rapid decrease in water pressure, an abnormally high flow rate, or water usage exceeding typical levels.

When the intelligent water meter 302 detects moisture in the environment, the intelligent water meter 302 is configured to deliver an emergency massage to the intelligence platform, to enable the intelligence platform to automatically initiate a phone call to the mobile device to report the flooding risk. The intelligence platform 306 delivers the predetermined settings to the intelligent water meter 302.

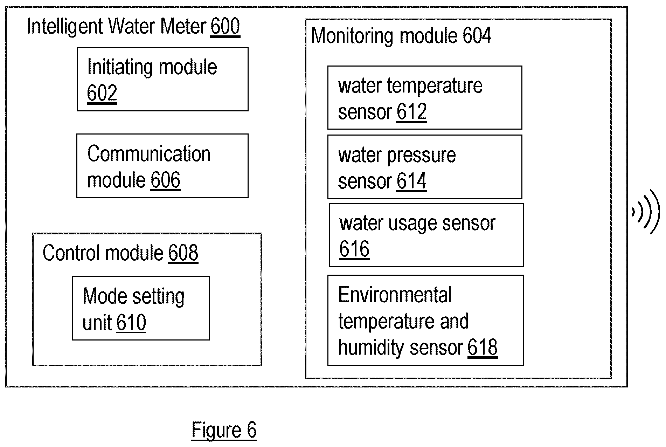

The computer system 300 may also allow users to predetermine settings in three modes of the intelligent water meter 302, which includes "Home Mode"," Away Mode", and "Disarm Mode", for example, Figures 6A-6E.

The thresholds of water continuous use and temperature and alert settings can be set on the mobile device 308. The default settings of each mode include that time period setting is 15 minutes, water temperature setting is 5 °C. In Home Mode, a plurality of thresholds, such as time period, water temperature, the switch of notifications, the switch of automatic shut-off can be predetermined. The available time period is between 0 minutes and 120 minutes. The available temperature range is between 0 and 100 °C. The notification is initiated when the water flow exceeds the set duration. The notification is initiated when the water temperature falls below the set threshold.

In Away Mode, in addition to the same plurality of thresholds as in Home Mode, if the water flow exceeds the set duration, or if the water temperature falls below the set threshold, the notification is initiated by the intelligence platform 306, and the water valve is shut-off automatically by the intelligent water meter 302.

In Disarm Mode, the plurality of thresholds includes time period, water temperature and the switch of notifications. If the water flow exceeds the set duration, or if the water temperature falls below the set threshold, the notification is initiated and sent by the intelligence platform 306 to the mobile device 308. In other words, in Disarm Mode, the computer system 300 only provides notifications and does not perform an automatic shut-off action.

The mobile device 308 is further configured to activate or switch between the three modes of the intelligent water meter 302 by issuing voice commands. The computer system 300 enables direct wireless connectivity among the intelligent water meter 302, the intelligence platform 306 and the mobile device 308. In particular, the wireless connectivity may feature dual-mode capabilities, supporting both WiFi 2.4GHz and Bluetooth Low Energy (BLE) for smart connections. BLE can operate in a low power mode when no data is being transmitted. Specifically, the connection time between the intelligent water meter 302 and the mobile device 308 during data transfer is limited to a few milliseconds. Therefore, the use of the intelligent water meter 302 is advantageous for energy and cost savings.

The intelligent water meter 302 can turn on or off a water valve automatically when a predetermined threshold is reached. In particular, the water valve can be turned on or off by the mobile device 308 through the intelligent water meter 302 anywhere. In particular, the water valve also can be turned by the mobile device 308 through the intelligent water meter 302 with adjustable water flow, and adjustable angle of ball valve to increase or decrease water flow. The intelligence platform 306 delivers a notification to the mobile device 308 when the status of the water leak has been changed. The mobile device 308 receives and displays the real-time data of water parameters, and pre-determines conditions for controlling remotely the intelligent water meter 302.

Database 310 is configured to store real-time raw data of the plurality of water parameters, full processed data, and operational records, wherein the processed data include any one or more of the predetermined conditions, wherein the operational records at least include logs, historical notifications and linkage records of the intelligent water meter 302.

The detector for water leak 304 can be installed in home wherever to monitor whether water fixtures and appliances have in a risk for potential water damage, every water fixture and appliance is linked to the intelligent water meter 302 within a residential water network, for example, washing machine, hot water tank, dishwasher a water softener, shower, toilet, sinks, and outdoor spigot and etc. The detector for water leak 304 can provide 24/7 monitoring to reduce the risk of water damage. The detector for water leak 304 can deliver real-time notifications of water events that happen outside of pipes, such as a flooding basement or malfunctioning appliance. The detector for water leak 304 can deliver real-time data of the plurality of preset parameters to the intelligence platform for evaluation of water flow and risk. The detector for water leak 304 is communicatively connected to the intelligent water meter 302 for delivering the irregular water data, to enable the intelligent water meter 302 to turn off the water valve off automatically, and to avoid a risk of water damage or frost or mold.

Once the detectors are installed, the distinct signals of every fixture and appliance connected to the property's plumbing are monitored. The individual property models continuously improve with each water event, adapting dynamically to the water systems they protect.

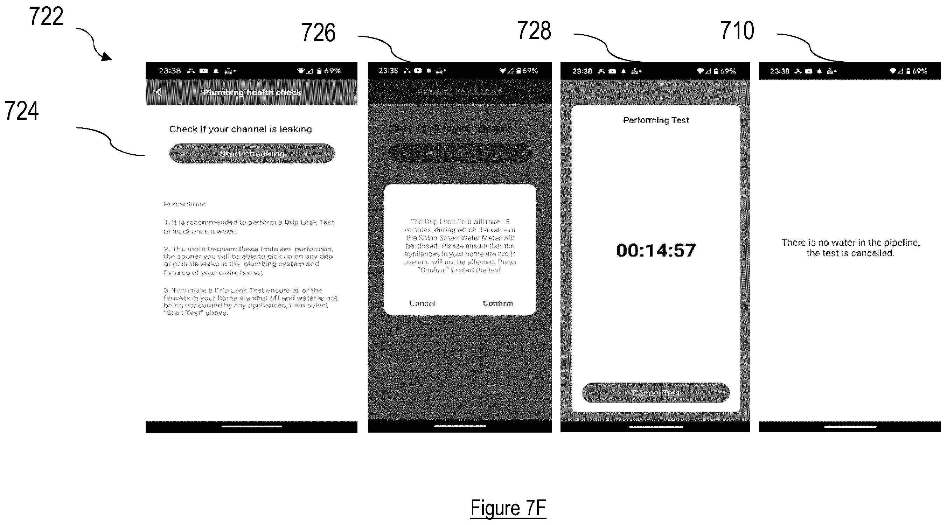

In some embodiment, the computer system 300 may also allow the intelligence platform 306 to analyze real-time data from a home appliance 312 and the detector for water leak 304 that are accessible via the wireless network, and to initiate an alert to the mobile device 308 after an emergency is detected and evaluated. The computer system 300 may also allow users to activate plumbing health drip tests. The plumbing health drip test is designed to identify leaks in household appliances. Users can initiate a 15-minute Drip Leak Test by pressing "start" on their mobile device, for example, Figure 7F.

Before initiating the plumbing health drip test, each home appliance is detected as not in use, and the water valve is automatically turned off by the intelligent water meter 302. If no water is detected in the pipeline during this time, the plumping health drip test will automatically be cancelled. The application may also allow users to activate power failure protection for the intelligent water meter 302. The intelligent water meter 302 is equipped with a battery supply to maintain operational functionality for at least six months during power interruptions.

The intelligent water meter 302 can be installed vertically and horizontally in the pipeline, for example, Figure 9A and 9B. The application may also support Smart-Link functionality, enabling the creation of intelligent scenarios by adding conditions, tasks, effective periods, and connections the detector for water leak 304. In some embodiments, the intelligence platform 306 may activate text and email alerts to as many users as possible, with printing and report functions of usage.

Through the application, the computer system 300 enables users on the mobile device 308 to check water consumption and remaining water amount of the predetermined water usage within a specific time period, such as daily, weekly, monthly and deliver water reports accordingly via emails. The computer system 300 also supports settings about water consumption limit during a specific time period, such as per day, per week, or per month.

Referring to Figure 4, shown therein is a block diagram of an intelligence platform 400 for water metering with leak detection and surveillance, according to an embodiment. The intelligence platform 400 includes a data collection module 402 for collecting the real-time data that generated and delivered by the intelligent water meter 302 and the detector for water leak 304, respectively. The intelligence platform 400 includes a data analysis module 404 for analyzing and evaluating water flow and leak risk according to the real-time data of the plurality of preset parameters. A plurality of Artificial intelligent (AI) models 406 are embedded-in the data analysis module 308 to detect potential water leak risks.

Once the water leak risk is determined, the intelligence platform 400 includes a communication module 408 for remotely controlling the intelligent water meter, while a user interface and reporting module 410 in the intelligence platform 400 for sending emergency water use alerts to the mobile device 308. In particular, irregularities in water parameters, for example, a rapid decrease in water pressure, an abnormally high flow rate, or water usage exceeding typical levels.

In some embodiment, the data analysis module 404 analyze real-time data from either a home appliance 312 or the detector for water leak 304 that both are accessible via the wireless network. When an emergency is evaluated, the user interface and reporting module 410 initiates an alert to the mobile device 308. When the communication module 410 receives an emergency massage from the intelligent water meter due to moisture in the environment, the user interface and reporting module 410 automatically initiates a phone call to the mobile device to report the flooding risk. The communication module 408 delivers the predetermined settings to the intelligent water meter.

The intelligence platform 400 is communicatively connected to at least one intelligent water meter 302 and other equipment in a building's water supply system. Further, these Al models 406 analyze historical water usage data to identify inefficiencies in water use in the entire building. The analysis results then can be used to automatically control the building's water supply system, such as control of pumps and valves, thereby helping to reduce water waste and reduce utility costs. The intelligence platform 400 further includes a billing module 412 for generating billing information based on real-time data collection. The billing module also supports back billing to correct previously inaccurate or incomplete charge for utility company.

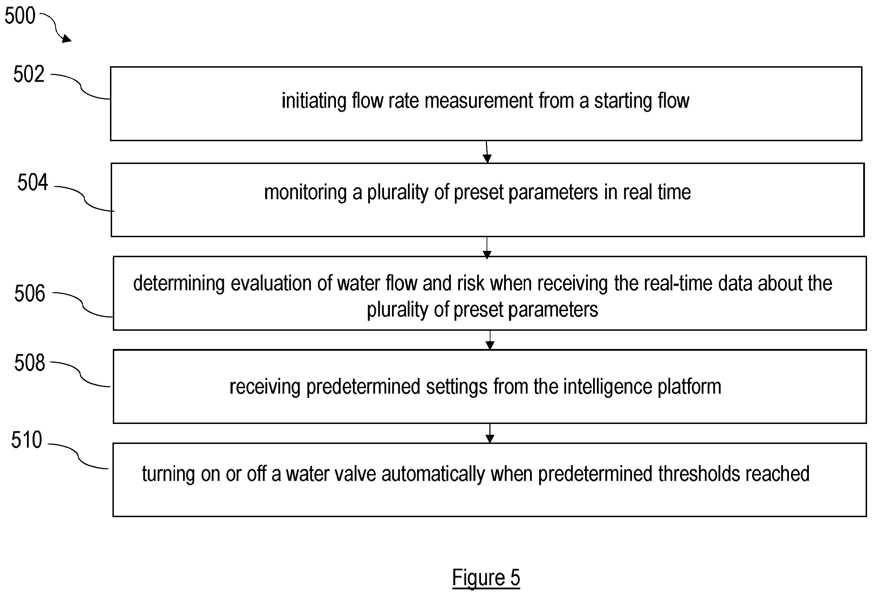

Referring to Figure 5, shown therein is a block diagram of a computer implemented method 500 for water metering with leak detection and surveillance. At 502, initiating flow rate measurement from a starting flow. The starting flow refers to the minimum amount of water that the intelligent water meter can accurately measure. In some embodiments, the caliber of the intelligent water meter 302 is 3/4" (1.9cm), and flow rate measurement is initiated by the intelligent water meter can initiate when the starting flow is 0.0069 Gallon Per Minute (GPM) amount. In some embodiments, the caliber of the intelligent water meter 302 is 1" (2.5cm), and flow rate measurement is initiated by the intelligent water meter when the starting flow is 0.0110 GPM amount.

In some embodiments, the caliber of the intelligent water meter 302 is 1.5" (3.8cm), and flow rate measurement is initiated by the intelligent water meter when the starting flow is 0.0176 GPM amount. In some embodiments, the caliber of the intelligent water meter 302 is 2" (5cm), and flow rate measurement is initiated by the intelligent water meter when the starting flow is 0.0264 GPM amount. Therefore, a suitable caliber of the intelligent water meter for the installation will ensure that even the smallest flows are measured correctly, which is essential for efficient water management and early detection of leak issues.

At 504, monitoring a plurality of preset parameters in real time, wherein the plurality of preset parameters include any one or more of water temperature, water pressure, water flow rate, water usage, and environmental temperature and humidity. Water temperature, water pressure, water flow rate and water usage in the pipe can be monitored in real time by a plurality of sensors that are employed in the intelligent water meter 302. Environmental temperature and humidity can be monitored in real time by a sensor that are employed in the intelligent water meter 302. At 506, determining evaluation of water flow and risk when receiving the real-time data about the plurality of preset parameters. In particular, irregularities in preset parameters, in particular, water parameters, indicate the possibility of water leak risk, for example, a rapid decrease in water pressure, an abnormally high flow rate, or water usage exceeding typical levels. The real-time data from the intelligent water meter is used to monitor preset parameters within the pipeline as well as environmental conditions at the location of the intelligent water meter, while real-time data from at least one detector is used to monitor at least one operating appliance, such as dishwasher, hot water tank, washing machine and so on. A plurality of operating appliances connected to the intelligent water meter via the pipe constitutes a residential water network.

At 508, receiving predetermined settings from the intelligent platform, wherein the predetermined settings are set by a mobile device. The predetermine settings in three modes are applied to control the intelligent water meter remotely, the three modes include "Home Mode"," Away Mode", and "Disarm Mode". The settings about water continuous use and temperature and alert can be set on the mobile device. The default settings of each mode include that time period setting is 15 minutes, water temperature setting is 5 °C.

In Home Mode, a plurality of thresholds, such as time period, water temperature, the switch of notifications, the switch of automatic shut-off can be predetermined. The notification is initiated when the water flow exceeds the set duration. The notification is initiated when the water temperature falls below the set threshold. In Away Mode, in addition to the same plurality of thresholds as in Home Mode, if the water flow exceeds the set duration, or if the water temperature falls below the set threshold, the notification is initiated by the intelligence platform, and the water valve is shut-off automatically by the intelligent water meter. In Disarm Mode, the plurality of thresholds includes time period, water temperature and the switch of notifications. If the water flow exceeds the set duration, or if the water temperature falls below the set threshold, the notification is initiated and sent by the intelligence platform to the mobile device. In other words, in Disarm Mode, notifications are provided, and an automatic shut-off action is not performed.

At 510, turning on or off a water valve automatically when the predetermined thresholds reached. In particular, the water valve can be turned on or off by the mobile device 308 through the intelligent water meter anywhere. In particular, the water valve also can be turned by the mobile device through the intelligent water meter with adjustable water flow, and adjustable angle of ball valve to increase or decrease water flow. Further, the three modes of the intelligent water meter can be activated or switched each other using voice commands issued through the mobile device.

Figure 6 is an intelligent water meter 600 for water metering with leak detection and surveillance, according to an embodiment. The intelligent water meter 600 includes an initiating module 602, a monitoring module 604, a communicating module 606, and a control module 608. The control module 608 further includes a mode setting unit 610. A plurality of sensors is employed in the monitoring module 604, and at least include water temperature sensor 612, water pressure sensor 614, water usage sensor 616 and environmental temperature and humidity sensor 618. The intelligent water meter 600 includes a Liquid-crystal Display (LCD) display for displaying gauge values in real time.

The initiating module 602 is configured to initiate flow rate measurement from a starting flow. In some embodiments, the caliber of the intelligent water meter 600 is 3/4" (1.9cm), and the intelligent water meter can initiate flow rate measurement when the starting flow is 0.0069 Gallon Per Minute (GPM) amount. In some embodiments, the caliber of the intelligent water meter 600 is 1" (2.5cm), and the intelligent water meter can initiate flow rate measurement when the starting flow is 0.0110 GPM amount. In some embodiments, the caliber of the intelligent water meter 600 is 1.5" (3.8cm), and the intelligent water meter can initiate flow rate measurement when the starting flow is 0.0176GPM amount. In some embodiments, the caliber of the intelligent water meter 600 is 2" (5cm), and the intelligent water meter can initiate flow rate measurement when the starting flow is 0.0264 GPM amount. Therefore, an intelligent water meter with a suitable caliber for the installation will ensure that even the smallest flows are measured correctly, which is essential for efficient water management and early detection of leak issues.

The monitoring module 604 is configured to monitor a plurality of preset parameters in real time, wherein the preset parameters include any one or more of water temperature, water pressure, water flow, water usage, as well as environmental temperature and humidity. Water temperature, water pressure, water flow rate and water usage in the pipe can be monitored in real time by a plurality of sensors that are employed in monitoring module 604. The real-time data from the monitoring module 604 is used to monitor preset parameters within the pipe, while real-time data from at least one detector is used to monitor at least one operating appliance, such as dishwasher, hot water tank and so on. A plurality of operating appliances connected to the intelligent water meter via the pipe constitutes a residential water network.

In some embodiments, leak detection technology utilizes a plurality of ultrasonic sensors to sample the pressure in the entire residential water system 240 times every second. In some embodiments, the monitoring module 604 further includes a sensor 612 for monitoring water temperature in the pipe in real time. In some embodiments, the monitoring module 604 further includes a sensor 614 for monitoring water pressure in the pipe in real time. In some embodiments, the monitoring module 604 further includes a sensor 616 for monitoring water usage in the pipe in real time. In some embodiments, the monitoring module 604 further includes a sensor 618 for monitoring environmental temperature and humidity around the location of the intelligent water meter 600. The sensors 612, 614, 616 and 618 are communicatively connected to monitoring module 604 through wireless technologies, such as, Long Range (LoRa), Wireless Fidelity (Wi-Fi), and Bluetooth.

In some embodiments, the intelligent water meter 600 can be used for cold water pipes and hot water pipes. For the hot water pipes, the intelligent water meter can withstand a temperature range of 90 to 130 °C. However, the actual temperature of the hot water cannot exceed 100 °C, since the steam water cannot be measured by a water meter. Therefore, 100°C is the maximum measurable temperature for the intelligent water meter 302. Furthermore, the intelligent water meter has been qualified by CUL Certification (Canadian Underwriters Laboratories), NSF Certification (National Sanitation Foundation), ISO9001 Certification (International Organization for Standardization), AWWA 700-20 Certification (American Water Works Association), FCC Certification (Federal Communications Commission) and IC Certification (Industry Canada).

The communicating module 606 is configured to deliver real-time data about the plurality of preset parameters to an intelligence platform. In particular, irregularities in preset parameters indicate the possibility of water leak risk, for example, a rapid decrease in water pressure, an abnormally high flow rate, or water usage exceeding typical levels. Furthermore, the communicating module 606 is configured to receive predetermined conditions from the intelligence platform, wherein the predetermined conditions are set by a mobile device 308. When the intelligent water meter 600 detects moisture through the sensor 618, the communication module 606 is configured to deliver an emergency massage to the intelligence platform 306, to enable the intelligence platform to automatically initiate a phone call to the mobile device to report the flooding risk.

The control module 608 is configured to turn on or off a water valve automatically when the predetermined conditions reached. In particular, the water valve can be turned on or off by the control module 318 anywhere. In particular, the water valve also can be turned by the control module 608 through the intelligent water meter with adjustable water flow, and adjustable angle of ball valve to increase or decrease water flow. The control module 608 further includes a mode setting unit 610, wherein the mode setting unit 610 is configured to execute predetermined settings in three modes. The predetermined settings in three modes are applied to control the intelligent water meter remotely, the three modes include "Home Mode"," Away Mode", and "Disarm Mode". The settings about water continuous use and temperature and alert can be set on the mobile device. The default settings of each mode include that time period setting is 15 minutes, water temperature setting is 5 °C.

In Home Mode, a plurality of thresholds, such as time period, water temperature, the switch of notifications, the switch of automatic shut-off can be predetermined. The notification is initiated when the water flow exceeds the set duration. The notification is initiated when the water temperature falls below the set threshold. In Away Mode, in addition to the same plurality of thresholds as in Home Mode, if the water flow exceeds the set duration, or if the water temperature falls below the set threshold, the notification is initiated by the intelligence platform, and the water valve is shut-off automatically by the intelligent water meter. In Disarm Mode, the plurality of thresholds includes time period, water temperature and the switch of notifications. If the water flow exceeds the set duration, or if the water temperature falls below the set threshold, the notification is initiated and sent by the intelligence platform to the mobile device. In other words, in Disarm Mode, notifications are provided, and an automatic shut-off action is not performed.

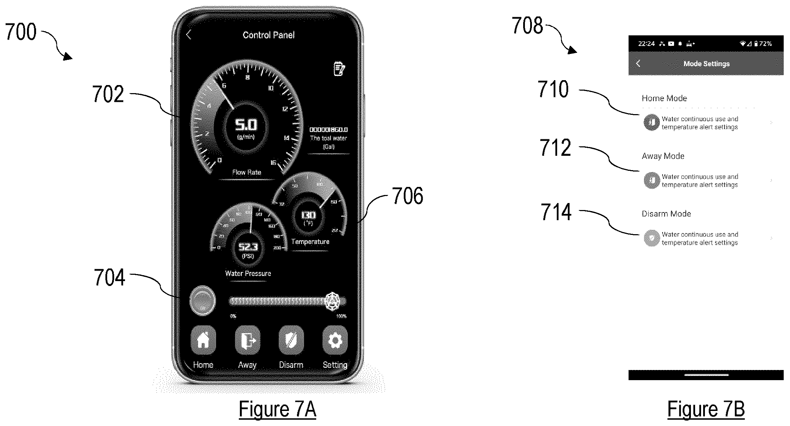

Figures 7A to 7E are example devices display 700, 708, 714 and 716 for three modes, according to an embodiment. In Figure 7A, the mobile device 308 shows a monitoring interface 700. The monitoring interface 700 includes a digital gauge 702 for real-time water flow rate monitoring, a digital gauge 704 for real-time water pressure monitoring and a digital gauge 706 for real-time water temperature monitoring.

In Figure 7B, mobile device 308 shows a mode setting interface 708. The mode setting interface 708 includes a home mode 710, an away mode 712 and a disarm mode 714 available selected by a user.

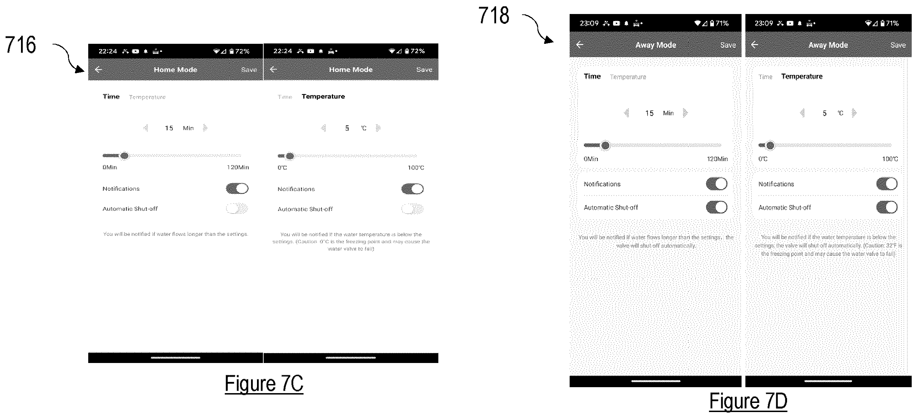

In Figure 7C, mobile device 308 shows a home mode interface 716. The home mode interface 718 shows a plurality of thresholds, such as time period, water temperature, the switch of notification, the switch of automatic shut-off. The default setting of the home mode includes that time period setting is 15 minutes, water temperature setting is 5 °C . The notification is initiated when the water flow exceeds the set duration. The notification is initiated when the water temperature falls below the set threshold.

In Figure 7D, mobile device 308 shows an away mode interface 718. The default setting of the away mode includes that time period setting is 15 minutes, water temperature setting is 5 °C. The notification is initiated when the water flow exceeds the set duration and the intelligent water meter is shut off automatically. The notification is initiated when the water temperature falls below the set threshold and the intelligent water meter is shut off automatically.

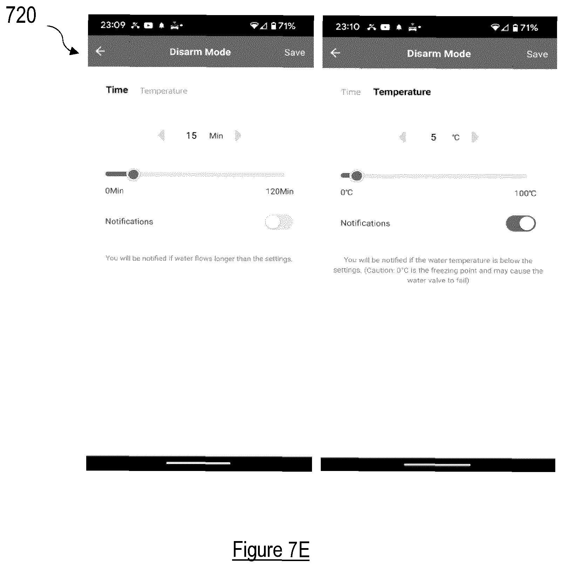

In Figure 7E, the mobile device 308 shows a disarm mode interface 720. The default setting of the disarm mode includes that time period setting is 15 minutes, water temperature setting is 5 °C. The notification is initiated when the water flow exceeds the set duration. The notification is initiated when the water temperature falls below the set threshold. In disarm mode 714, the mobile device 308 only provides notifications and does not perform an automatic shut-off action.

Figure 7F is an example device display 722 for plumbing health check. In Figure 7F, a drip leak test for plumbing health check is performed periodically, it aims to detect if any leakage on home appliances. At 724, clicking a button for starting checking whether plumbing is leaking. Prior to the step of 724, all of the faucets in home should be shut off and water is not being consumed by any appliances. At 726, confirming that the water valve is turned off and appliances in home are not in use. At 728, performing the drip leak test, which takes 15 minutes. The interface shows a timer of 15 minutes. At 710, if no water in the pipeline is monitored by the intelligent water meter, the drip leak test would be cancelled automatically.

Figures 8A through to 8D show exemplary installations of a water meter in accordance with the invention. Figures 8A - 8C are covered by a plastics assembly which, in the case of figure 8B, has a height of 12cm, a length of 19.5cm and a width of 8.6cm. Figures 8D shows a water meter in accordance with the invention bereft of its plastics enclosure.

While the above description provides examples of one or more apparatus, methods, or systems, it will be appreciated that other apparatus, methods, or systems may be within the scope of the claims as interpreted by one of skill in the art.

## Claims

1. A system for water metering with leak detection and surveillance, the system comprising:
an intelligent water meter (302) configured to:
initiate flow rate measurement from a starting flow;
monitor a plurality of preset parameters in real time;
deliver real-time data about the plurality of preset parameters to an intelligence platform (306); and
turn on or off a water valve automatically when a predetermined threshold is reached;
a detector (304) installed for monitoring a functioning appliance, the detector configured to:
deliver real-time data regarding water leaking to the intelligence platform and the intelligent water meter; and
the intelligence platform (306) configured to:
deliver predetermined settings to the intelligent water meter;
generating billing information based on the real-time data delivered by the intelligent water meter; and
determine evaluation of water flow and risk when receiving the real-time data about the plurality of preset parameters.

2. The computer system of claim 1, wherein the starting flow is set from a predetermined flow rate.

3. The computer system of any one of claims 1 to 2, further comprising a mobile device (308) configured to receive and display the real-time data of preset parameters, and pre-determine conditions for controlling remotely the intelligent water meter.

4. The computer system of claim 3, wherein the intelligent water meter (302) is communicatively connected to the mobile device, the detector and the intelligence platform via a wireless network, and wherein the wireless network includes Bluetooth Low Energy.

5. The computer system of any one of claims 1 to 4, wherein the detector (304) is further configured to deliver real-time notifications of water events that happen outside of pipes.

6. The computer system of any one of claims 1 to 5, wherein the notification includes at least one of: a low water flow alert when a water flow duration exceeds a predetermined threshold; a time alert when a time range exceeds a predetermined threshold that is between 0 minutes to 120 minutes; a low water temperature when a water temperature duration exceeds a predetermined threshold.

7. The computer system of any one of claims 1 to 6, wherein the intelligence platform is configured to communicatively connect to the detector and the intelligent water meter for a drip leak test of pipe plumbing.

8. The computer system of claim 7, wherein the drip leak test is cancelled immediately upon the intelligent water meter detecting that there is no water in a pipeline.

9. The computer system of any one of claims 1 to 8, wherein the intelligent water meter is configured to maintain operational functionalities during power interruptions lasting at least six months.

10. The computer system of any one of claims 1 to 9, wherein the intelligent water meter is further configured to execute the plurality of thresholds remotely in a home mode, an away mode and a disarm mode.

11. A computer implemented method for water metering with leak detection and surveillance, the computer implemented method comprising:
initiating flow rate measurement from a starting flow;
monitoring a plurality of preset parameters in real time;
determining evaluation of water flow and risk when receiving the real-time data about the plurality of preset parameters;
receiving predetermined settings from the intelligence platform, wherein the predetermined settings are set by a mobile device; and
turning on or off a water valve automatically when predetermined thresholds reached.

12. An intelligent water meter (302) comprising:
an initiating module (602) configured to initiate flow rate measurement from a starting flow;
a monitoring module (604) configured to monitor a plurality of preset parameters in real time;
a communicating module (606) configured to:
deliver real-time data about the plurality of preset parameters to an intelligence platform; and
receive predetermined settings from the intelligence platform, wherein the predetermined settings are set by a mobile device; and
a control module (608) configured to turn on or off a water valve automatically when predetermined thresholds reached.

13. The intelligent water meter of claim 12, wherein the starting flow is set from a predetermined Gallons Per Minute (GPM) amount.

14. The intelligent water meter (302) of any one of claims 12 to 13, wherein the communicating module is communicatively connected to the mobile device and the intelligence platform via a wireless network, wherein the wireless network includes Bluetooth Low Energy (BLE).

15. A computer implemented method for detecting water leak and surveillance, applied in an intelligent water meter (302), the computer implemented method comprising:
initiating flow rate measurement from a starting flow (502);
monitoring a plurality of preset parameters in real time (504);
delivering real-time data about the plurality of preset parameters to an intelligence platform (506);
receiving predetermined settings from the intelligence platform, wherein the predetermined settings are set by a mobile device (508); and
turning on or off a water valve automatically when the predetermined thresholds are reached (510).
